# EUROPEAN PATENT SPECIFICATION

(11) **EP 1 827 127 B1**
(45) Date of publication and mention of the grant of the patent: **29.07.2015**
(21) Application number: 05820214.4
(22) Date of filing: 14.12.2005
(51) Int. Cl.: A23K 1/14, A23P 1/12, A23L 3/16, A23L 1/29

(54) **PREPARATION AND USE OF HIGH OMEGA-3 AND OMEGA-6 FEED**
HERSTELLUNG UND VERWENDUNG VON FUTTERMITTEL MIT HOHEM OMEGA-3- UND OMEGA-6-GEHALT
PREPARATION ET UTILISATION D'ALIMENTS POUR ANIMAUX A HAUTE TENEUR EN OMEGA-3 ET OMEGA-6

(30) Priority: 15.12.2004 US 635953 P; 29.03.2005 US 665846 P
(43) Date of publication of application: 05.09.2007
(73) Proprietor: O&T Farms, Regina, Saskatchewan S4P 3C6 (CA)
(72) Inventor: WIENS, Tim, Regina, Saskatchewan S4P 3C6 (CA)
(74) Representative: Jostarndt, Hans-Dieter
(86) International application number: PCT/CA2005/001892
(87) International publication number: WO 2006/063444

(56) References cited:
- EP-A1- 1 106 077
- EP-B1- 1 021 960
- EP-B1- 1 106 077
- WO-A1-00/00038
- WO-A1-98/47389
- CA-A1- 2 319 978
- CA-A1- 2 444 189
- GB-A- 2 296 852
- US-A- 4 310 558
- RAES, K., ET AL.: "EFFECT OF LINSEED FEEDING AT SIMILAR LINOLEIC ACIDS LEVELS ON THE FATTY ACID COMPOSITION OF DOUBLE MUSCLED BELGIAN BLUE YOUNG BULLS" MEAT SCIENCE, vol. 66, February 2004 (2004-02), pages 307-315, XP002552391 GBELSEVIER SCIENCE. ISSN: 0309-1740

## Description

### PRIOR APPLICATION INFORMATION

This application claims the benefit of US Provisional Application 60/635,953, filed December 15, 2004 and US Provisional Application 60/665,846, filed March 29, 2005.

### BACKGROUND OF THE INVENTION

High blood lipid levels, especially cholesterol and triglycerides, are a concern to a significant proportion of the population. However, some fats, particularly omega-3 polyunsaturated fatty acids have been shown to have beneficial effects in reducing the risk of heart disease and other conditions. As such, increasing the omega-3 content of food products has long been a goal of the food industry.

Some prior art methods have the disadvantage of imparting a "fishy" odor to the food products produced by or from animals, or reducing milk-producing or egg-laying production or capacity. Thus, although the benefits of products having higher omega-3 and/or omega-6 content is well established, attaining these products in an acceptable and economical way has not been as straight-forward.

For example, US Patent 5,133,963 teaches a method of producing poultry products with increased concentrations of omega-3 fatty acids using a poultry feed that has omega-3 polyunsaturated fatty acids and vitamin E and an enriched water which is fed to the poultry separately. The preferred omega-3 source is "vacuum deodorized fish oil".

US Patent 5,012,761 teaches feeding chickens a composition including fish oil for producing eggs having higher levels of polyunsaturated omega-3 fatty acids.

US Patent 4,918,104 teaches a method of increasing the concentration of omega-3 polyunsaturated fatty acid in poultry eggs which comprises administering to the hens an effective amount of preformed omega-3 polyunsaturated fatty acid or a metabolic precursor thereof. Examples of metabolic precursors given include linolenic acid, linseed oil, fish or a fish derivative. The feed itself comprised 45-65% corn.

EP 1 021 083 teaches a poultry feeding regime which results in a higher incorporation efficiency of omega-3 fatty acids which involves feeding the poultry a higher amount of omega-3 fatty acid in the later phase of the poultry's production period.

EP 678 247 teaches a food product having a ratio of omega-6 fatty acid to omega-3 fatty acid of 3:1 to 10:1 for reducing inflammatory and allergic skin responses.

EP 775 449 describes a method of feeding poultry oil high in omega-3 fatty acid and omega-6 fatty acid derived from specific microorganisms.

Published US Patent Application 2003/0211221 teaches a method of producing milk enriched with omega-3 fatty acid and/or omega-6 fatty acid wherein omega-3 and/or omega-6 are mixed with a protective fat which is not degraded or hydrogenated in the rumen. Examples of protective fats include tristearine and other tri-saturated triacylglycerols and di-saturated triacylglycerols.

Published US Patent Application 2001/0000151 teaches a food product comprising a mixture of microflora Thraustochytrium, Schizochytrium and mixtures thereof and flaxseed, rapeseed, soybean and avocado meal which has a balance of long chain and short chain omega-3 highly unsaturated fatty acids.

US Patent 5,985,348 teaches a process for producing microbial products with a high concentration of omega-3 fatty acid and the addition thereof to processed foods and feeds.

US Patent 5,693,358 teaches a method of preparing an animal feed wherein powdered fish oil is made by processing fishes.

PCT Application WO99/08540 teaches a method of producing a dairy product enriched in conjugated linoleic acids (CLA) and/or other beneficial unsaturated fatty acids by feeding the ruminant a diet that includes fish oil or fish meal.

PCT Application WO 98/47389 teaches a method for producing omega-3 fatty acid enriched eggs using a feed comprised of corn, soybean meal, flaxseed, oyster shell, limestone, salt, vitamin premix, mineral premix, vitamin E premix, methionine, animal/vegetable fat blend, pectinase and glucanase enzyme product and phosphorus.

PCT Application WO 95/21539 teaches a feed for producing eggs having an increased omega-3 fatty acid content comprising 1.5-2.5% fish oil, 1-4% linseed oil and an antioxidant.

PCT Application WO 00/44239 teaches a feed additive comprising a source of DHA and feather meal.

Canadian Application CA 2319978 teaches a method for producing pelletizable feed comprising preparing a meal of seed material, such as canola, and oil therefrom as well as legume material, such as pea, by extrusion thereof and adding alfalfa.

US 4,310,558 teaches a method for producing dry pet food , whereby food pieces are blended with proteinaceous and farinaceous materials and extruded to form the pet food.

As will be appreciated by one of skill in the art, in view of concerns regarding outbreaks of diseases such as bovine spongiform encephalopathy (BSE), the use of animal by-products in feed is less desirable. Clearly, a feed component capable of producing enhanced levels of omega-3 in animal products that does not contain animal by-products is needed.

### SUMMARY OF THE INVENTION

According to the present invention, there is provided a method of preparing an animal feed component comprising:
grinding a quantity of a pulse crop selected from the group consisting of peas, lentils, chick peas, fababeans, white beans and mixtures thereof into a powder, said powder being ground to a consistency such that at least half of the pulse crop product has a diameter of 5 microns or less;
mixing a quantity of intact oilseeds selected from the group consisting of flax, sunflower, safflower, rapeseed, canola, soybean and combinations thereof with the powder, thereby forming a mixture, said mixture being 15-55% pulse crop and 45-85% oil seed;
extruding the mixture at a temperature between about 110°C (230°F) to about 176,7 °C (350°F) and a pressure of between about 1379 kPa (200 psi) to about 2758 kPa (400 psi); and
forming the mixture into feed components.

### DESCRIPTION OF THE PREFERRED EMBODIMENTS

Unless defined otherwise, all technical and scientific terms used herein have the same meaning as commonly understood by one of ordinary skill in the art to which the invention belongs. Although any methods and materials similar or equivalent to those described herein can be used in the practice or testing of the present invention, the preferred methods and materials are now described. Described herein is an improved feed component which protects biologically active substances within the feed such that the biologically active substances are not degraded or decomposed prior to reaching desired absorption sites within the digestive tract of the animal. Specifically, in one embodiment, there is provided an improved feed component for ruminants, wherein the biologically active substances, for example, omega-3 fatty acids, pass through the rumen without decomposition and are subsequently absorbed in the abomasums and subsequent digestive tract. In another embodiment, there is provided a feed component for poultry. As a result, use of the feed results in animal products, for example, eggs, milk and meat, having elevated levels of the biologically active substances, for example, omega-3, CLA and DHA, as discussed below.

As discussed below, the feed is prepared by grinding a quantity of one or more pulse products or pulse crop products or pulse crop to a powder or flour, a fine powder, as discussed below. The powder is then mixed with intact or whole oilseeds so as to form a homogeneous mixture. As will be apparent to one of skill in the art, intact or whole oil seeds are in contrast with ground oil seeds or oil seed meal which are typically used in the art. The mixture is subjected to a combination and heat and pressure which causes partial gelatinization of the mixture which in turn makes the carbohydrates and starches therein more digestible. The heat and pressure are released during the extrusion of the mixture and the extruded product comprises ruptured oilseeds wherein the oil released from the ruptured seeds is coated by the ground pulse products, as discussed below. The mixture is then formed into feed components, for example, but by no means limited to feed pellets and feed crumbles by means known in the art. As will be appreciated by one of skill in the art, other suitable feed shapes and/or textures known in the art may be used as well.

It is important to note that the prior art teaches that ground oilseed or oil extracted from oilseeds must be used in the preparation of feed so that the animal does not have to digest the seed itself.

As will be appreciated by one of skill in the art, the determination of the ingredients used is based on the need to meet a specific nutrient analysis for a given feed product, for example, specific oil levels, protein, omega fatty acids and ruminant by-pass values.

Preferably, the feed product or component has a fat or lipid content between 18.5-22.5%. Preferably, omega-3 fatty acid is 47.5-57.5% of the total fat or lipid content while omega-6 fatty acid is 14-24% of the total fat or lipid content. In addition, the feed product preferably has a protein content of 15-25%.

In one embodiment, the mixture comprises 15-55% ground pulse crop or pulse product and 45-85% intact oilseed. In an alternative embodiment, the mixture comprises 45-55% ground pulse crop or pulse products and 45-55% intact oilseed. In an alternative embodiment, the mixture comprises 65-85% intact oilseed and 15-35% ground pulse crop or pulse products.

In one embodiment, the feed mixture consists essentially of 15-55% pulse crop or pulse product and 45-85% intact oilseed. In an alternative embodiment, the feed mixture consists essentially of 45-55% pulse crop or pulse products and 45-55% intact oilseed. In an alternative embodiment, the feed mixture consists essentially of 65-85% intact oilseed and 15-35% pulse crop or pulse products.

In yet other embodiments, the feed mixture comprises 10-55% pulse crop or pulse product, 5-10% roughage, for example, alfalfa, and 45-85% intact oilseed. In an alternative embodiment, the feed mixture comprises 40-55% pulse crop or pulse products, 5-10% roughage and 45-55% intact oilseed. In an alternative embodiment, the feed mixture comprises 65-85% intact oilseed, 5-10% roughage and 15-30% pulse crop or pulse products.

The pulse products or pulse crop products may be selected from the group consisting of peas, lentils, chick peas, fababeans, white beans and the like or combinations or mixtures thereof. It is noted that pulse crops are well known and well defined in the art.

The oilseeds may be selected from the group consisting of flax, sunflower, safflower, rapeseed, canola or soybean and the like or combinations or mixtures thereof. It is noted that oilseeds or oilseed crops which may be used interchangeably are well known in the art.

The roughage may be alfalfa, for example, but by no means limited to dehydrated alfalfa or sun-cured alfalfa or may be another suitable form of fiber known in the art.

As will be appreciated by one of skill in the art, the quality of grains and oilseeds may be variable, meaning that the exact proportion that is used in the combinations to make up the feed product could be increased or decreased depending on the desired oil and protein levels.

In some embodiments, oil seeds which are off-grade, for example, no more than 20% off grade, may be used and the specific quantity used determined by the calculated nutrient analysis.

For preparation, the dry ingredients are mixed together to form a homogeneous mixture and this mixture is then fed into an extruder. Initially, the pulse products are ground to a fine powder, for example, through a #14 screen or a #7 screen. As will be known by one of skill in the art, a #7 screen has a screen size of 0,28 cm (7/64 of an inch). After having been ground in this manner, the pulse products have a consistency that is 60-80% of flour, the balance being 5 microns or less, that is, at least half of the particles have a diameter of 5 microns or less. The oil seeds are left in an intact or whole state, that is, in an unground state. The extruder mechanically creates restrictions which in turn creates high levels of friction. This in turn heats the mixture and causes the mixture to become gelatinized which in turn makes the carbohydrates and starches more digestible. While not wishing to be bound to a specific theory, it is believed that the pressure and pressure release causes the cell walls to be broken down. Furthermore, cells that hold the oil of the oilseed grains effectively exploded during this process and release the oil so it is no longer part of the seed. Thus, on digestion, the oil is available for use by the animal without the need for the animal to digest the seed itself. It is further believed that the oil is driven into the ground pulse product particles which in turn results in the ruminant by-pass, as discussed below. That is, the oils are separated from the mucilage in the oil seed and consequently the oil is made more available to digestion by the animals. In the case of the production of the feed products, the settings of the extruder are as follows: pressure is standard (1379 kPa- 2758 kPa equivalent to 200-400 psi) and the temperature is within a range of 110°C (230F) to 176,7 °C (350F) and the mixture of ground pulse crops and intact oil seeds are subjected to these conditions for at least 3-60 seconds, 3-45 seconds, 3-30 seconds, 3-20 seconds, 5-45 seconds, 5-20 seconds, 5-30 seconds, 5-15 seconds 10-20 seconds, 10-30 seconds or 10-45 seconds. In a preferred embodiment, the time of residence in the extrusion process is at least 5-30 seconds.

In a preferred embodiment, the temperature for extrusion may range from 110°C (230F) to 143,3°C (290F), from 123,9 °C (255F) to 135 °C (275F) or preferably from 265F to 268F. As discussed below, in embodiments wherein the feed comprises soybeans, the pressure is as above but the temperature range may be 148,9 °C (300F) to 176,7 °C (350F), 162,8°C (325F) to 171,1 °C (340F), 162,8°C (325F) to 168,3°C (335F), 162,8°C (325F) to 165,5°C (330F), 160°C (320F) to 162,8°C (325F) or 157,2°C (315F) to 160°C (320F).

In one embodiment of the invention, there is provided a method of preparing an animal feed component comprising:
grinding a quantity of a pulse product into a powder;
mixing a quantity of intact (whole) oilseeds with the powder, thereby forming a mixture;
subjecting the mixture to a temperature between about 110°C (230F) to about 176,7 °C (350F) and a pressure of between about 1379 kPa (200 psi) to about 2758 kPa (400 psi), thereby gelatinizing the mixture;
extruding the mixture; and
forming the extruded mixture into feed components. In most embodiments, peas are the preferred pulse crop for making the feed products. Specifically, peas have a higher level of absorbance and encapsulate the oil that is released from the oil seeds. Peas need to be ground fine to expose as much starch as possible to accomplish this encapsulating. Specifically, pea starch is very absorbent and has a great wicking effect on fluids. The starch also keeps the oil in suspension under abrasive conditions.

Alternatively, in those embodiments wherein soybeans are used, the mixture containing the soya bean is heated to a higher temperature, for example, 148,9 °C (300F) - 176,7 °C (350F) or more preferably from 162,8°C (325F) to 168,3°C (335F), as discussed above, because soya has anti-nutritional factors that need to be removed.

One clear advantage of the invention is that the animal feed product produced thereby is substantially animal by-product free. As a result, the feed product is a competitor to feeds containing fishmeal or fish oil but is substantially or entirely animal by-product free .Aquatic product are considered animal by-products. Thus, in a preferred embodiment, the feed products described herein are essentially animal by-product free, that is, the feed products consist essentially of the pulse flour and oilseeds in combinations and ratios as described herein. That is, the feed components produced are characterized in that the feed components are substantially animal product-free or are entirely animal by-product-free.

As discussed herein, the above-described feed components are added to a standard feed or substituted for a portion of a standard feed, generally from at least about 1 % to about 40% of the standard feed or unsupplemented feed, or from at least about 5% to about 40% or from at least about 5% to about 30% or from at least about 5% to about 25% or from at least about 5% to about 20%. That is, in some embodiments, the above-described feed products comprise at least 1-40% of the feed ration of an animal.
There is significant improvement in the digestibility of the fatty acids because of the fact that they are free from the seed. The animal does not have to spend any energy to separate the oil from the other nutritional components. The other nutritional components have a higher level of digestibility because of the extrusion process discussed above.

According to another aspect of the invention, there is provided an extruded feed component comprising pulse flour and oilseed. In another aspect of the invention, there is provided an extruded feed component consisting essentially of pulse flour and oilseed. Preferably, the extruded feed component is substantially animal product free.

As used herein, "animal" or "feed animal" refers to but is by no means limited to animals typically raised for meat production and/or production of other products, for example, eggs and milk, which are referred to collectively as "animal products" or "edible animal products". These include but are by no means limited to poultry such as chickens, turkeys, ducks, geese and the like, cattle, swine, goats, rabbits, deer, caribou, bison and the like.

As shown in the examples, feeding animals feed components prepared according to the invention resulted in increases in omega-3 levels of from 1.5-5 fold, 1.5-4 fold, or 2-4 fold in eggs compared to eggs from hens fed only the standard feed. Furthermore, chicken breast meat had increased omega-3 levels of from 1.5-6 fold, or from 1.5-5 fold, or from 1.5-3 fold or from 2-3 fold, or from 2-5 fold or from 2-6 fold. As will be appreciated by one of skill in the art, control animals are kept under similar conditions and are of similar or the same breeds and are used for comparison purposes. Similarly, omega3 levels in milk were increased 1.5-3 fold or 2.5-3 fold or 2-3 fold from cows fed the feed pellets of the instant invention. CLA levels were also increased 1.5-2 fold.

In one embodiment of the invention, there is provided a method of increasing the amount of omega-3 fatty acids or CLA in an edible animal product comprising:
feeding a feed animal a standard feed ration wherein at least 1-40% of the feed ration is replaced by a feed prepared by
   grinding a quantity of a pulse product into a powder;
   mixing a quantity of intact oilseeds with the powder, thereby forming a mixture;
   subjecting the mixture to a temperature between about 230F to about 350F and a pressure of between about 200 psi to about 400 psi, thereby gelatinizing the mixture;
   extruding the mixture; and
   forming the mixture into feed components; and
harvesting the edible animal product from the animal, characterized in that the edible animal product has at least 1.5-5 fold increased omega3 levels or at least 1.5-2 fold increased CLA levels compared to an edible animal product harvested from a similar animal fed a standard feed ration.

The invention will now be further illustrated by way of examples. However, the invention is not limited to the examples.

### MIXTURE FORMULA EXAMPLE 1

50% flax
50% peas

It is of note that in some embodiments, this feed component is fed to chickens and pigs.

### MIXTURE FORMULA EXAMPLE 2

45% flax
55% peas

### MIXTURE FORMULA EXAMPLE 3

55% flax
45% peas

### MIXTURE FORMULA EXAMPLE 4

10% flax
3.5% canola
66.8% soya beans
10% alfalfa
9.7% peas

It is of note that as discussed above, feed mixture containing soya beans are typically heated at higher temperatures, as discussed above. In some embodiments, this feed component is fed to cows.

### MIXTURE FORMULA EXAMPLE 5

15% flax
15.9% peas
5% alfalfa
64.1% soya beans

### MIXTURE FORMULA EXAMPLE 6

50% lentils
50% flaxseed

### MIXTURE FORMULA EXAMPLE 7

20% lentils
60.3% flaxseed
19.7% peas

### MIXUTRE FORMULA EXAMPLE 8

10.2% lentils
14.9% flaxseed
10% alfalfa
64.9% soya beans

### MIXTURE FORMULA EXAMPLE 9

50% white beans
50% flaxseed

### MIXTURE FORMULA EXAMPLE 10

11.6% white beans
14.6% flaxseed
10% Alfalfa
63.8% soya beans

In one example, to achieve the desired omega values in the end products, for example, eggs, poultry meat and pork, 50% flax and 50% peas are combined and extruded as discussed above. After extrusion, the following fatty acid profile is achieved:
1. total fat [ee]%= 20.25
2. total saturated %= 9.0
3.total unsaturated %= 91.0
4. munic C 14:0% =.05
5. palmitic 16:%= 5.79%
6.stearic C 18.0%=2.71
7.oleic c 18:1%=19.0
8. linoleic c 18:2%=14.3
9.alfa linolenic c 18:3% =57.0

This type of profile achieved omega-3 numbers in broiler chicken boneless and skinless breast and thighs that on a normal basis are 4.50% to 10.85%, as discussed below. This has been achieved by feeding 10% feed components as described above that has been balanced in a normal diet. The other nutritional properties are used as part of the diet balancing.

In trials with eggs, 15% feed component as described above achieved an improvement of omega-3 levels from 140 mg from a 50 gram egg to 570 mg from the same size of egg, as described below.

Milk trials indicate an improvement from 0.34% of omega-3 to 0.96%.

Furthermore, as shown in Tables 1-3, when fed to broiler chickens, the feed component as described above resulted in increased omega-3 levels in the breast meat (TABLE 1), leg meat (TABLE 2) and cavity/body fat (TABLE 3) of chickens 1-4. It is of note that chickens 1-6 were raised in one barn while chickens 7-12 were raised in a second barn, indicating that the differences are not strictly environmental. Clearly, use of the feed as described above resulted in an increase of omega-3 levels in breast meat from 2-3% to 8-10.5%. Furthermore, the fat on the breast meat was white or slightly yellow, that is, normal, regardless of the feed used.

Furthermore, omega-3 concentration per 100 grams of yolk (TABLE 4) was also increased, from approximately 2.5 grams in the control to 7-8.5 grams in eggs from hens fed the above-described feed. Similarly, the Omega 3 concentration per 19.5 grams yolk in a 50 gram egg was also increased from 0.48 grams to 1.4-1.7 grams (TABLE 5).

As will be appreciated by one of skill in the art, other suitable feed formulas described herein will produce similar results.

Thus, in another aspect of the invention, there is provided a method of increasing the omega-3 or DHA or CLA (Conjugated Linoleic Acid) content of an animal product comprising feeding an animal a feed component composed of pulse flour and oilseed and then harvesting the animal product, for example, eggs, milk, meat or the like.

In another example, seven cows in the University of Saskatchewan dairy herd were housed in tie-stalls and fed a feed ration including 1.5 kg of the above-described feed daily for 14 days. Milk samples were collected and composited on each of the last two days. These two samples were sub-sampled and sent to the Provincial Dairy Lab for analysis. The remaining daily samples were divided and the four resulting samples analyzed for fatty acid content by three methods: the Feng method, which is a recent one developed specifically for milk; the Bligh and Dyer method, developed in the 1950s for fish and animal tissue lipid extraction; and the Ros-Gottlieb method which is also used for animal tissue.

The average daily milk production was approximately 50 kg from cows that were 60 to 80 days in milk. The complete fatty acid analysis by the three methods is shown in Table 6. As can be seen, agreement among methods was good but the Ros-Gottleib method failed to detect some of the longer chain unsaturates.

Results of the Feng method are summarized in Table 7 and are compared to a recent paper by H. Petit (2005, J Dairy Sci 88: 1755). The CLA content of 1% of recovered fatty acids is almost twice the control ration amount reported by Petit and appreciably higher than the 0.77% when Petit fed 12% flax seed. Previous analysis of cows fed the standard feed ration without the above-described feed returned CLA content that ranged from 0.5% to 0.7% of fatty acids.

Thus, supplementing the standard feed with the above-described feed resulted in a substantial increase in milk CLA content. Vaccinic acid is produced by rumen bacteria and converted to CLA after absorption. The level in cows fed a feed ration supplemented with the above-described feed is higher. However, some of the trans C18 isomers are strongly associated with milk fat depression. As shown in Table 6, cows in the example had 1.12% transvaccenic acid in their milk indicating that milk fat percentage may be lower.

Alpha linolenic acid is the main fatty acid in flax oil. The above-described feed resulted in a level above the Petit control (CONTROL) and 76% of that of cows fed 12% flax seed (12% FLAX).

The Omega-6 (3.52) to Omega-3 (0.95) ratio is 3.69. This is in the desirable range and much more favorable than the 10 or greater ratio found in many feeds. As will be appreciated by one of skill in the art, as used herein, omega-3 fatty acids include 18:3cis-9,12,15; 20:3cis-11,14,17; 20:5cis-5,8,11,14,17; 22:5cis-7,10,13,16,19; and 22:6cis-4,7,10,13,16,19. Omega-6 fatty acids include 18:2cis-9,12; 18:3cis-6,9,12; 20:2cis-11,14; 20:3cis-8,11,14; 20:4cis-5,8,11,14; 22:2cis-13,16; and 22:4cis-7,10,13,16.

In another example, 23 cows of the University of Saskatchewan dairy herd were fed standard feed to which 1.5 kg of the above-described feed was added daily. This ration was fed for four months, since calving. Milk samples were collected and composited on two days. The samples were sub sampled and sent to the Provincial Dairy Lab for analysis. The remaining daily samples were divided and the four resulting samples were analyzed for fatty acid content as described above.

Six of the cows were fed increasing levels of the above-described feed replacing concentrate in the standard feed (high group TMR). The target was 3.0 kg daily, however feed intake increased and the amount of the above-described feed was allowed to reach an average of 3.5 kg per cow daily. These cows were 60 to 100 days post calving. Milk samples were collected after 14 days of feeding the higher level of the above-described feed and composited for all six cows.

Two litres of Dairyworld^{™} 3.25% fat milk was sub sampled and submitted to the Provincial Dairy Lab and analyzed for fatty acids in the Animal Science lab by the Bligh and Dyer method for comparison purposes.

Milk yield of the 23 cows fed 1.5 kg of the above-described feed averaged 41.6 kg (3.08% fat) on the days milk samples were collected. The six cows fed 3.5 kg of the above-described feed averaged 51.1 kg of 3.42% fat milk, or 1.75 kg of milk fat daily. The Dairyworld milk fat analysis by the provincial lab was 3.22%.

The complete fatty acid analysis of milk from cows fed 1.5 and 3.5 kg of the above-described feed are summarized in Table 8. In Table 9, results are compared to Petit, as discussed above. As can be seen, the CLA content of 1% of recovered fatty acids is almost twice the control ration amount reported by Petit and appreciably higher than the 0.77% when Petit fed 12% flax seed. As discussed above, prior analysis showed that cows fed the standard ration had CLA production between 0.5%-0.7% of fatty acids. Dairyworld milk had approximately 0.67% CLA.

Thus, the above-described feed clearly resulted in a substantial increase in milk CLA content.

Feeding 3.5 kg of the above-described feed maintained milk fat percentage at 3.42% (Table 10) in cows producing 51.1 kg milk and 1.75 kg of fat daily. This is higher than when cows were fed 1.5 kg of the above-described feed when milk fat percentage was reduced when a lower than intended level of forage was fed. Alpha linolenic acid is the main fatty acid in flax oil and the above-described feed resulted in a level above the Petit control an that of cows fed 12% flax seed. Dairyworld milk contained about 90% of the level when 1.5 kg of the above-described feed was used compared to 78% of the level when 3.5 kg was used. The amounts of EPA, DPA and DHA are low with no increase when 3.5 kg was fed. Dairyworld milk contained trace amounts of DHA. Based on the Bligh and Dyer method, cows fed 1.5 kg of the above-described feed component produced milk with 1.02% omega-3 fatty acids in the milk fat. This means that one litre of milk containing 3.42% fat would yield 315 mg of omega-3 fatty acids, or 78 mg in a 250 ml serving. This is 1.2 times the amount found in Dairyworld milk fat as currently marketed. These amounts are a significant contribution to the estimated daily need for 110 to 160 mg per day.

Table 11 shows the omega-6 to omega-3 ratio to be 3.31 when 1.5 kg of the above-described feed ration was fed and 3.15 when 3.5 kg was fed.

Thus, feeding the above-described feed component to cows resulted in increased concentrations of CLA, alpha-linolenic and DHA in milk fat.

In addition, as part of this experiment, milk collected from the cows fed 1.5 kg of the feed component daily was sampled 14 days after the feed component had been discontinued. As can be seen in Table 14, discontinuing the above-described feed component resulted in a reduction of the levels of several fatty acids, including CLA (0.99 to 0.51), α-linolenic (0.75 to 0.49), EPA (0.06 to 0.05), DPA (0.12 to 0.08) and most strikingly, DHA (0.10 to 0.00). This data clearly shows that the above-described feed component increases the levels of several important fatty acids. Furthermore, DHA levels are greatly increased, because once the feed component is removed, DHA levels return to below the detectable levels.

In another example, the effects of the above-described extrusion process on rumen protected (bypassed or undegraded) dry matter, starch, fat, protein and non-protein-starch-fat component. In this example, rumen degradation characteristics of the above-described feed mixture prior to extrusion and after extrusion were analyzed. Specifically, two Holstein dry cows fitted with a large rumen cannula with an internal diameter of 10 cm for measuring rumen degradation characteristics were housed at the experimental station in the University of Saskatchewan. Ruminal degradation characteristics were determined using the in situ method of Yu et al.

The chemical composition of the two samples analyzed are shown in Table 12. As can be seen, the feed contained dry matter from 91-95%, crude protein around 32%, crude fat around 18% and starch about 5%.

The extrusion significantly increased rumen protected dry matter by 1.3 times from 284 to 368 g/kg and significantly increased rumen protected protein by 2 times from 84 to 166 g/kg dry matter or from 94 to 185 g/kg dry matter. Furthermore, extrusion significantly affected in situ rumen residue of fat at 0, 2, 4, 24 and 48 hour incubation times, of starch at 2, 24 and 48 hours and of non-protein-starch-fat (NPSF) at 0, 2, 4, 12, 24 and 48 hours.

Thus, the extrusion process significantly improved by-pass dry matter and crude protein and shifted degradation of protein from the rumen to the small intestine.

Specifically, in the case of dry matter, only 12% of the raw feed remained after 12 hours of incubation, but at the same time point, 25% of the dry matter of the extruded feed remained in the nylon bag. Similarly, extrusion also greatly reduced the rate of protein degradation in the rumen. Initial protein solubility was reduced by extrusion and protein degradation was reduced greatly, increasing by-pass protein to about 55%. The effect of extrusion on starch was minimal.

The reduced rate of dry matter and protein makes it unlikely that the above-described feed will contribute to rumen acidosis.

In another example, egg-laying hens were fed the following diets:
Group 1 (control) - Phase 1 Low Intake to 80 grams
Group 2 - Group 1 diet including 10% flax
Group 3 - Group 1 diet including 10% above-described feed
Group 4 - Group 1 diet including 15% above-described feed
Group 5 - Group 1 diet including 20% above-described feed

Eggs were collected at three times and the omega-3 and omega-6 fatty acid contents of the eggs as well as the cholesterol content of the third set were analyzed. Specifically, approximately 5 g of yolk was used for extraction of the total lipids by the Bligh Dyer procedure described above. The total fat content was determined gravimetrically. Approximately 10 mg of lipids were transmethylated using 6% sulphuric acid in methanol and the individual fatty acid methyl esters determined on an Agilent 6890N gas chromatograph equipped with a 7683 auto sampler/injector. Cholesterol was performed using AOAC method 976.26.

Table 13 reports the data for the three samples calculated on a 16.0 g yolk (the average weight of test yolks) and a 50 g egg.

The invention is defined by the claims.

**TABLE 1**

| | Weight (grams) | Total Fat | Omega 3 | Omega 6 |
|---|---|---|---|---|
| 1 | 1418.7 | 1.64% | 8.52% | 18.24% |
| 2 | 1384.8 | 1.81% | 9.84% | 20.49% |
| 3 | 1238.3 | 1.83% | 8.92% | 18.91% |
| 4 | 932.1 | 1.51% | 8.04% | 17.71% |
| 5 | 735 | 2.00% | 2.74% | 18.42% |
| 6 | 700.5 | 2.29% | 2.08% | 17.98% |
| 7 | 1576 | 3.28% | 2.92% | 16.72% |
| 8 | 747.9 | 1.85% | 2.47% | 19.21% |
| 9 | 1038.1 | 1.42% | 2.84% | 18.18% |
| 10 | 1659.4 | 1.93% | 2.73% | 17.68% |
| 11 | 1479.1 | 2.09% | 2.56% | 17.76% |
| 12 | 933.3 | 2.94% | 2.94% | 20.32% |

**TABLE 2**

| | Weight (grams) | Total Fat | Omega 3 | Omega 6 |
|---|---|---|---|---|
| 1 | 1418.7 | 3.62% | 8.82% | 18.79% |
| 2 | 1384.8 | 4.39% | 10.48% | 21.45% |
| 3 | 1238.3 | 3.42% | 9.10% | 20.53% |
| 4 | 932.1 | 4.24% | 9.11% | 19.77% |
| 5 | 735 | 4.25% | 2.44% | 18.11% |
| 6 | 700.5 | 3.36% | 2.47% | 19.47% |
| 7 | 1576 | 4.03% | 2.34% | 18.94% |
| 8 | 747.9 | 3.40% | 2.81% | 20.62% |
| 9 | 1038.1 | 3.73% | 2.41% | 19.08% |
| 10 | 1659.4 | 3.40% | 2.31% | 18.99% |
| 11 | 1479.1 | 3.99% | 2.29% | 19.51% |
| 12 | 933.3 | 3.51% | 2.67% | 21.78% |

**TABLE 3**

| | Weight (grams) | Total Fat | Omega 3 | Omega 6 |
|---|---|---|---|---|
| 1 | 1418.7 | 81.09% | 8.41% | 15.36% |
| 2 | 1384.8 | 61.67% | 8.58% | 17.28% |
| 3 | 1238.3 | 63.82% | 8.96% | 16.94% |
| 4 | 932.1 | 72.21% | 9.25% | 17.06% |
| 5 | 735 | 54.64% | 2.15% | 14.84% |
| 6 | 700.5 | 54.85% | 2.02% | 15.54% |
| 7 | 1576 | 78.96% | 2.15% | 14.19% |
| 8 | 747.9 | | 2.25% | 16.92% |
| 9 | 1038.1 | 78.23% | 2.12% | 14.34% |
| 10 | 1659.4 | 77.54% | 2.22% | 14.47% |
| 11 | 1479.1 | 71.54% | 2.25% | 14.90% |
| 12 | 933.3 | 68.52% | 2.48% | 16.43% |

**TABLE 4**

| | Total fat Unknown | Omega 3 | Omega 6 | SFA | MUFA | PUFA |
|---|---|---|---|---|---|---|
| C | 32.10 | 2.48 | 15.03 | 29.28 | 52.73 | 17.51 0.47 |
| 1 | 31.76 | 7.42 | 15.21 | 29.86 | 47.09 | 22.62 0.43 |
| 2 | 32.65 | 8.60 | 15.95 | 29.84 | 45.24 | 24.54 0.38 |
| 3 | 31.00 | 8.34 | 15.76 | 32.22 | 43.42 | 24.10 0.50 |

**TABLE 5**

| | Total fat | Omega 3 | Omega 6 |
|---|---|---|---|
| C | 6.26 | 0.48 | 2.94 |
| 1 | 6.19 | 1.45 | 2.97 |
| 2 | 6.37 | 1.68 | 3.11 |
| 3 | 6.05 | 1.63 | 3.07 |

**Table 6 Fatty Acid content of milk when cows fed 1.5 kg feed daily**

| Fatty Acid | Feng | Bligh | Ros-Gottlieb |
|---|---|---|---|
| 10:0 Capric | 2.924 | 3.162 | 3.220 |
| 12:0 Lauric | 3.424 | 3.328 | 3.802 |
| 14:0 Myristic | 11.308 | 11.081 | 12.272 |
| 14:1 c-9 Myristoleic | 1.082 | 1.260 | 1.132 |
| 15:0 Pentadecanoic | 1.341 | 1.384 | 1.405 |
| 16:0 Palmitic | 29.541 | 30.124 | 30.685 |
| 16:1 c-9 Palmitoleic | 1.854 | 1.784 | 1.701 |
| 17:0 Margaric | 0.837 | 0.849 | 0.832 |
| 17:1 c-9 Heptadecenoic | 0.304 | 0.294 | 0.268 |
| 18:0 Stearic | 11.823 | 12.197 | 11.809 |
| 18:1 t-9 Elaidic | 0.646 | 0.639 | 0.624 |
| 18:1 t-11 Transvaccenic | 1.124 | 0.965 | 1.238 |
| 18:1 c-9 Oleic | 26.548 | 25.251 | 24.927 |
| 18:1 c-11 Vaccenic | 0.943 | 0.907 | 0.865 |
| 18:1 c-6 | 0.604 | 0.591 | 0.573 |
| 18:2 c-9, 12 Linoleic | 2.980 | 2.920 | 2.667 |
| 18:3 c-6, 9, 12 γ-Linoleic | 0.287 | 0.199 | 0.106 |
| 20:0 Arachidic | 0.000 | 0.000 | 0.000 |
| 18:3 c-9, 12, 15 α-linolenic | 0.756 | 0.745 | 0.600 |
| 20:1 c-11 Eicosenoic | 0.000 | 0.000 | 0.000 |
| 18:2 c-9, t-11 CLA | 0.998 | 0.983 | 0.896 |
| 18:2 t-10, c-12 CLA | 0.000 | 0.000 | 0.000 |
| 20:2 c-11, 14 Eicosadienoic | 0.000 | 0.000 | 0.000 |
| 20:3 c-8, 11, 14 Homo-γ-linoleic | 0.000 | 0.000 | 0.000 |
| 22:0 Behenic | 0.223 | 0.242 | 0.207 |
| 20:3 c-11, 14, 17 Eicosatrienoic | 0.000 | 0.000 | 0.000 |
| 22:1 c-13 Erucic | 0.000 | 0.000 | 0.000 |
| 20:4 c-5,8,11,14 Arachidonic | 0.189 | 0.195 | 0.171 |
| 20:5 EPA c-5,8,11,14,17 | 0.057 | 0.058 | 0.000 |
| 22:2 c-13,16 Docosadienoic | 0.044 | 0.050 | 0.000 |
| 22:4 c-7,10,13,16 Docosatetraenoic | 0.021 | 0.026 | 0.000 |
| 24:0 Lignoceric | 0.000 | 0.000 | 0.000 |
| 22:5 DPA c-7,10,13,16,19 | 0.106 | 0.120 | 0.000 |
| 22:6 DHA c-4,7,10,13,16,19 | 0.034 | 0.096 | 0.000 |

**Table 7 Milk Fatty Acid Composition**

| Fatty Acid | U of S | Control | 12% Flax |
|---|---|---|---|
| Lauric C12 | 3.4 | 3.7 | 2.6 |
| Myristic C14 | 11.3 | 11.3 | 9.1 |
| Palmitic C16 | 29.5 | 35.8 | 23.3 |
| Stearic C18 | 11.8 | 8.4 | 15.7 |
| Oleic C18:1 | 26.5 | 20 | 30.7 |
| Vaccinic C18:1,c-11 | 0.94 | 0.15 | 0.37 |
| Linoleic C18:2 | 3.00 | 1.75 | 1.39 |
| α-Linoleic C18:3 | 0.76 | 0.54 | 1.00 |
| γ-Linoleic C18:3 | 0.29 | 0.04 | 0.01 |
| CLA C18:2, c-9,t-11 | 1.00 | 0.56 | 0.77 |
| EPA C20:5 | 0.06 | 0.04 | 0.06 |
| DPA C22:5 | 0.11 | 0.07 | 0.06 |
| DHA C22:6 | 0.03 | | |
| Total | 88.69 | 82.35 | 85.06 |

**Table 8 Fatty Acid content of milk from cows**

| Fatty Acid | Bligh | Dairyworld |
|---|---|---|
| 10:0 Capric | 3.29 | 3.31 |
| 12:0 Lauric | 3.64 | 3.98 |
| 14:0 Myristic | 12.15 | 12.54 |
| 14:1 c-9 Myristoleic | 0.94 | 1.21 |
| 15:0 Pentadecanoic | 1.28 | 1.62 |
| 16:0 Palmitic | 27.85 | 35.05 |
| 16:1 c-9 Palmitoleic | 1.37 | 1.91 |
| 17:0 Margaric | 0.76 | 0.98 |
| 17:1 c-9 Heptadecenoic | 0.21 | 0. 30 |
| 18:0 Stearic | 15.52 | 10.78 |
| 18:1 t-9 Elaidic | 0.75 | 0.39 |
| 18:1 t-11 Transvaccenic | 1.40 | 0.78 |
| 18:1 c-9 Oleic | 23.39 | 21.28 |
| 18:1 c-11 Vaccenic | 0.73 | 0.85 |
| 18:1 c-6 | 0.78 | 0.36 |
| 18:2 c-9, 12 Linoleic | 2.77 | 2.46 |
| 18:3 c-6, 9, 12 γ-Linoleic | 0.28 | 0.22 |
| 20:0 Arachidic | 0.00 | 0.00 |
| 18:3 c-9, 12, 15 α-linolenic | 0.86 | 0.67 |
| 20:1 c-11 Eicosenoic | 0.00 | 0.00 |
| 18:2 c-9, t-11 CLA | 1.17 | 0.58 |
| 18:2 t-10, c-12 CLA | 0.04 | 0.00 |
| 20:2 c-11, 14 Eicosadienoic | 0.00 | 0.00 |
| 20:3 c-8, 11, 14 Homo-γ-linoleic | 0.00 | 0.00 |
| 22:0 Behenic | 0.28 | 0.22 |
| 20:3 c-11, 14, 17 Eicosatrienoic | 0.00 | 0.00 |
| 22:1 c-13 Erucic | 0.00 | 0.00 |
| 20:4 c-5,8,11,14 Arachidonic | 0.22 | 0.22 |
| 20:5 EPA c-5,8,11,14,17 | 0.07 | 0.06 |
| 22:2 c-13,16 Docosadienoic | 0.08 | 0.07 |
| 22:4 c-7,10,13,16 Docosatetraenoic | 0.01 | 0.03 |
| 24:0 Lignoceric | 0.00 | 0.00 |
| 22:5 DPA c-7,10,13,16,19 | 0.09 | 0.12 |
| 22:6 DHA c-4,7,10,13,16,19 | 0.06 | 0.00 |

**Table 9 Milk Fatty Acid Composition**

| Fatty Acid | 1.5 kg | 3.5 kg | Dairyworld |
|---|---|---|---|
| Lauric C12 | 3.3 | 3.3 | 3.3 |
| MyristicC14 | 11.1 | 12.1 | 12.5 |
| Palmitic C16 | 30.1 | 27.8 | 35 |
| Stearic C18 | 12.2 | 15.2 | 10.8 |
| Oleic C18:1 | 25.2 | 23.4 | 21.3 |
| Vaccinic C18:1,c-11 | 0.91 | 0.73 | 0.85 |
| Linoleic C18:2 | 2.92 | 2.77 | 2.46 |
| α-Linoleic C18:3 | 0.74 | 0.86 | 0.67 |
| γ-Linoleic C18:3 | 0.2 | 0.28 | 0.22 |
| CLA C18:2, c-9,t-11 | 0.98 | 1.17 | 0.58 |
| EPA C20:5 | 0.06 | 0.07 | 0.06 |
| DPA C22:5 | 0.12 | 0.09 | 0.12 |
| DHA C22:6 | 0.10 | 0.06 | 0.00 |
| Total | 88.884 | 89.23 | 88.64 |

**Table 10 Milk Yields and Fat Content**

| | 1.5 kg | 3.5 kg |
|---|---|---|
| Daily milk (kg) | 41.6 | 51.1 |
| Milk fat % | 3.08 | 3.425 |
| Fat, kg/day | 1.28 | 1.75 |

**Table 11 Total Fatty Acid Groups and Selected Ratios**

| | 1.5 kg (Feng) | 1.5 kg | 3.5 kg | Dairyworld |
|---|---|---|---|---|
| SFA | 61.42 | 60.27 | 64.78 | 68.49 |
| PUFA | 5.47 | 9.42 | 5.65 | 4.43 |
| PUFA/SFA | 0.09 | 0.16 | 0.09 | 0.06 |
| MUFA | 33.11 | 30.31 | 29.57 | 27.08 |
| CLA | 1.00 | 0.98 | 1.17 | 0.58 |
| Omega-3 | 0.95 | 0.98 | 1.08 | 0.86 |
| Omega-6 | 3.52 | 3.24 | 3.40 | 3.00 |
| w -6/ω-3 | 3.69 | 3.31 | 3.15 | 3.49 |

**Table 12 Chemical Composition of raw and extruded feed samples**

| | Batch 1 | | Batch 2 | |
|---|---|---|---|---|
| | Raw | Extruded | Raw | Extruded |
| Dry Matter | 90.99 | 95.43 | 91.25 | 95.29 |
| Crude Protein (% dry matter) | 31.57 | 31.97 | 32.37 | 32.30 |
| Crude Fat (% DM) | 17.73 | 17.80 | 17.61 | 18.76 |
| Starch (% DM) | 4.59 | 5.69 | 5.43 | 4.82 |
| NPSF (% DM) | 46.11 | 44.55 | 44.59 | 44.09 |

**Table 13**

| Group | Run | n-3 | n-6 | Total Fat | n-3:n-6 | Cholesterol |
|---|---|---|---|---|---|---|
| 1 | 1 | 0.14 | 0.76 | 4.9 | 5.4 | |
| | 2 | 0.16 | 0.87 | 5.0 | 5.4 | |
| | 3 | 0.15 | 0.79 | 4.8 | 5.5 | 210 |
| 2 | 1 | 0.29 | 0.87 | 4.7 | 3.0 | |
| | 2 | 0.37 | 0.84 | 5.0 | 2.3 | |
| | 3 | 0.38 | 0.85 | 4.9 | 2.2 | 210 |
| 3 | 1 | 0.26 | 0.93 | 4.8 | 3.6 | |
| | 2 | 0.29 | 1.04 | 5.0 | 3.6 | |
| | 3 | 0.28 | 0.98 | 5.1 | 3.5 | 211 |
| 4 | 1 | 0.26 | 0.91 | 4.8 | 3.5 | |
| | 2 | 0.31 | 1.00 | 5.1 | 3.2 | |
| | 3 | 0.28 | 0.89 | 4.9 | 3.2 | 246 |
| 5 | 1 | 0.20 | 1.06 | 4.8 | 5.3 | |
| | 2 | 0.21 | 1.07 | 5.0 | 5.1 | |
| | 3 | 0.24 | 1.08 | 4.9 | 4.5 | 223 |

**Table 14 Fatty Acid content of milk from cows during and after feed component**

| Fatty Acid | 1.5 kg | 3.5 kg | post 14 days |
|---|---|---|---|
| 10:0 Capric | 3.18 | 3.29 | 3.60 |
| 12:0 Lauric | 3.35 | 3.64 | 4.51 |
| 14:0 Myristic | 11.14 | 12.15 | 14.17 |
| 14:1 c-9 Myristoleic | 1.26 | 0.94 | 1.26 |
| 15:0 Pentadecanoic | 1.39 | 1.28 | 1.80 |
| 16:0 Palmitic | 30.30 | 27.85 | 35.29 |
| 16:1 c-9 Palmitoleic | 1.80 | 1.37 | 1.85 |
| 17:0 Margaric | 0.85 | 0.76 | 0.93 |
| 17:1 c-9 Heptadecenoic | 0.30 | 0.21 | 0.26 |
| 18:0 Stearic | 12.26 | 15.52 | 10.32 |
| 18:1 t-9 Elaidic | 0.64 | 0.75 | 0.40 |
| 18:1 t-11 Transvaccenic | 0.97 | 1.40 | 0.87 |
| 18:1 c-9 Oleic | 25.39 | 23.39 | 19.37 |
| 18:1 c-11 Vaccenic | 0.91 | 0.73 | 0.86 |
| 18:1 c-6 | 0.59 | 0.78 | 0.34 |
| 18:2 c-9, 12 Linoleic | 2.94 | 2.77 | 2.43 |
| 18:3 c-6, 9, 12 γ-Linoleic | 0.20 | 0.28 | 0.21 |
| 20:0 Arachidic | 0.00 | 0.00 | 0.00 |
| 18:3 c-9, 12, 15 α-linolenic | 0.75 | 0.86 | 0.49 |
| 20:1 c-11 Eicosenoic | 0.00 | 0.00 | 0.00 |
| 18:2 c-9, t-11 CLA | 0.99 | 1.17 | 0.51 |
| 18:2 t-10, c-12 CLA | 0.00 | 0.04 | 0.00 |
| 20:2 c-11, 14 Eicosadienoic | 0.00 | 0.00 | 0.00 |
| 20:3 c-8, 11, 14 Homo-γ-linoleic | 0.00 | 0.00 | 0.00 |
| 22:0 Behenic | 0.24 | 0.28 | 0.15 |
| 20:3 c-11, 14, 17 Eicosatrienoic | 0.00 | 0.00 | 0.00 |
| 22:1 c-13 Erucic | 0.00 | 0.00 | 0.00 |
| 20:4 c-5,8,11,14 Arachidonic | 0.20 | 0.22 | 0.20 |
| 20:5 EPA c-5, 8,11,14,17 | 0.06 | 0.07 | 0.05 |
| 22:2 c-13,16 Docosadienoic | 0.05 | 0.08 | 0.05 |
| 22:4 c-7,10,13,16 Docosatetraenoic | 0.03 | 0.01 | 0.00 |
| 24:0 Lignoceric | 0.00 | 0.00 | 0.00 |
| 22:5 DPA c-7,10,13,16,19 | 0.12 | 0.09 | 0.08 |
| 22:6 DHA c-4, 7,10,13,16,19 | 0.10 | 0.06 | 0.00 |

## Claims

1. A method of preparing an animal feed component comprising:
grinding a quantity of a pulse crop selected from the group consisting of peas, lentils, chick peas, fababeans, white beans and mixtures thereof into a powder, said powder being ground to a consistency such that at least half of the pulse crop product has a diameter of 5 microns or less;
mixing a quantity of intact oil seeds selected from the group consisting of flax, sunflower, safflower, rapeseed, canola, soybean and combinations thereof with the powder, thereby forming a mixture, said mixture being 15-55% pulse crop and 45-85% oil seed;
extruding the mixture at a temperature between about 110°C (230°F) to about 176,7 °C (350°F) and a pressure of between about 1379 kPa (200 psi) to about 2758 kPa (400 psi); and
forming the mixture into feed components.

2. The method of claim 1 wherein the temperature is from between about 123,9 °C (255°F) to about 135 °C (275°F).

3. The method of claim 1 wherein the temperature is from between about 129,4 °C (265°F) to about 131,1°C (268°F).

4. The method of claim 1 wherein the temperature is from between about 148,9 °C (300°F) to about 162,8°C (325°F).

5. The method of claim 1 wherein the temperature is from between about 162,8°C (325°F) to about 168,3°C (335°F).

6. A method of increasing the amount of omega-3 fatty acids or CLA or DHA in an edible animal product comprising:
feeding an animal a standard feed ration wherein at least 1-40% of the feed ration is replaced by a feed prepared by
grinding a quantity of a pulse crop selected from the group consisting of peas, lentils, chick peas, fababeans, white beans and mixtures thereof into a powder, said powder being ground to a consistency such that at least half of the pulse crop product has a diameter of 5 microns or less;
mixing a quantity of intact oilseeds selected from the group consisting of flax, sunflower, safflower, rapeseed, canola, soybean and combinations thereof with the powder, thereby forming a mixture, said mixture being 15-55% pulse crop and 45-85% oil seed;
extruding the mixture at a temperature between about 110°C (230°F) to about 176,7 °C (350°F) and a pressure of between about 1379 kPa (200 psi) to about 2758 kPa (400 psi); and
forming the mixture into feed components; and
harvesting the edible animal product from the animal, **characterized in that** the edible animal product has at least 1.5-5 fold increased omega3 levels or at least 1.5-2 fold increased CLA levels compared to an edible animal product harvested from a similar animal fed a standard feed ration.

7. The method of claim 9 wherein the temperature is from between about 123,9 °C (255°F) to about 135 °C (275°F).

8. The method of claim 9 wherein the temperature is from between about 129,4 °C (265°F) to about 131,1°C (268°F).

9. The method of claim 9 wherein the temperature is from between about 148,9 °C (300°F) to about 162,8°C (325°F).

10. The method of claim 9 wherein the temperature is from between about 162,8°C (325°F) to about 167,2°C (333°F).

11. The method according to claim 1 wherein the pulse product is peas.

12. The method according to claim 1 wherein the oil seed is flax.

## Patentansprüche

1. Verfahren zum Zubereiten einer Tierfutterkomponente, wobei das Verfahren umfasst:
Mahlen einer Menge einer Hülsenfrucht, die aus der Gruppe ausgewählt wird, die aus Erbsen, Linsen, Kichererbsen, Saubohnen, weißen Bohnen und Gemischen davon besteht, zu einem Pulver, wobei das Pulver zu einer Konsistenz gemahlen wird, dass wenigstens die Hälfte des Hülsenfruchtprodukts einen Durchmesser von 5 Mikrometern oder weniger aufweist;
Mischen einer Menge unversehrter Ölsamen, die aus der Gruppe ausgewählt werden, die aus Flachs, Sonnenblume, Saflor, Raps, Doppel-Null-Raps, Sojabohne und Kombinationen davon besteht, mit dem Pulver, dadurch Bilden eines Gemischs, wobei das Gemisch 15-55% Hülsenfrucht und 45-85 % Ölsamen ist;
Herauspressen des Gemischs bei einer Temperatur zwischen etwa 110 °C (230 °F) und etwa 176,7 °C (350 °F) und einem Druck zwischen etwa 1379 kPa (200 psi) und etwa 2758 kPa (400 psi); und
Bilden des Gemischs zu Futterkomponenten.

2. Verfahren nach Anspruch 1, wobei die Temperatur zwischen etwa 123,9 °C (255 °F) und etwa 135 °C (275 °F) beträgt.

3. Verfahren nach Anspruch 1, wobei die Temperatur zwischen etwa 129,4 °C (265 °F) und etwa 131,1 °C (268 °F) beträgt.

4. Verfahren nach Anspruch 1, wobei die Temperatur zwischen etwa 148,9 °C (300 °F) und etwa 162,8 °C (325 °F) beträgt.

5. Verfahren nach Anspruch 1, wobei die Temperatur zwischen etwa 162,8 °C (325 °F) und etwa 168,3 °C (335 °F) beträgt.

6. Verfahren zum Erhöhen des Gehalts an Omega-3-Fettsäuren oder CLA oder DHA in einem essbaren Tierprodukt, wobei das Verfahren umfasst:
Füttern einer Standardfutterration an ein Tier, wobei wenigstens 1-40 % der Futterration durch ein Futter ersetzt werden, das zubereitet wird durch:
Mahlen einer Menge einer Hülsenfrucht, die aus der Gruppe ausgewählt wird, die aus Erbsen, Linsen, Kichererbsen, Saubohnen, weißen Bohnen und Gemischen davon besteht, zu einem Pulver, wobei das Pulver zu einer Konsistenz gemahlen wird, dass wenigstens die Hälfte des Hülsenfruchtprodukts einen Durchmesser von 5 Mikrometern oder weniger aufweist;
Mischen einer Menge unversehrter Ölsamen, die aus der Gruppe ausgewählt werden, die aus Flachs, Sonnenblume, Saflor, Raps, Doppel-Null-Raps, Sojabohne und Kombinationen davon besteht, mit dem Pulver, dadurch Bilden eines Gemischs, wobei das Gemisch 15-55 % Hülsenfrucht und 45-85 % Ölsamen ist;
Herauspressen des Gemischs bei einer Temperatur zwischen etwa 110 °C (230 °F) und etwa 176,7 °C (350 °F) und einem Druck zwischen etwa 1379 kPa (200 psi) und etwa 2758 kPa (400 psi); und
Bilden des Gemischs zu Futterkomponenten; und
Einbringen des essbaren Tierprodukts von dem Tier, wobei das essbare Tierprodukt im Vergleich zu einem essbaren Tierprodukt, das von einem ähnlichen Tier eingebracht wurde, dem eine Standardfutterration gefüttert wurde, wenigstens 1,5-5-fach erhöhte Omega-3-Niveaus oder wenigstens 1,5-2-fach erhöhte CLA-Niveaus aufweist.

7. Verfahren nach Anspruch 6, wobei die Temperatur zwischen etwa 123,9 °C (255 °F) und etwa 135 °C (275 °F) beträgt.

8. Verfahren nach Anspruch 6 wobei die Temperatur zwischen etwa 129,4 °C (265 °F) und etwa 131,1 °C (268 °F) beträgt.

9. Verfahren nach Anspruch 6, wobei die Temperatur zwischen etwa 148,9 °C (300 °F) und etwa 162,8 °C (325 °F) beträgt.

10. Verfahren nach Anspruch 6, wobei die Temperatur zwischen etwa 162,8 °C (325 °F) und etwa 167,2 °C (333 °F) beträgt.

11. Verfahren nach Anspruch 1, wobei die Hülsenfrüchte Erbsen sind.

12. Verfahren nach Anspruch 1, wobei der Ölsamen Flachs ist.

## Revendications

1. Procédé de préparation d'un composant d'aliment pour animaux comprenant :
broyer une quantité de légumineuses sélectionnées parmi le groupe constitué de pois, lentilles, pois chiches, fèves des marais, haricots blancs et de mélanges de ceux-ci en une poudre, ladite poudre étant broyée en une consistance telle qu'au moins la moitié du produit de légumineuses a un diamètre de 5 microns ou moins ;
mélanger une quantité de graines oléagineuses intactes sélectionnées parmi le groupe constitué du lin, tournesol, safran, colza, canola, soja et de combinaisons de ceux-ci avec la poudre, formant de ce fait un mélange,
ledit mélange étant de 15 à 55 % de légumineuses et de 45 à 85 % de graine oléagineuse ;
extruder le mélange à une température comprise entre environ 110°C (230°F) et environ 176,7°C (350°F) et une pression comprise entre environ 1379 kPa (200 psi) et environ 2758 kPa (400 psi) ; et
former le mélange en des composants d'aliment.

2. Procédé selon la revendication 1, dans lequel la température va d'environ 123,9°C (255°F) à environ 135°C (275°F).

3. Procédé selon la revendication 1, dans lequel la température va d'environ 129,4°C (265°F) à environ 131,1°C (268°F).

4. Procédé selon la revendication 1, dans lequel la température va d'environ 148,9°C (300°F) à environ 162,8°C (325°F).

5. Procédé selon la revendication 1, dans lequel la température va d'environ 162,8°C (325°F) à environ 168,3°C (335°F).

6. Procédé d'augmentation de la quantité d'acides gras oméga-3 ou CLA ou DHA dans un produit comestible pour animaux comprenant :
nourrir un animal d'une ration d'aliment standard, dans lequel au moins 1 à 40 % de la ration d'aliment est remplacé par un aliment préparé en broyant une quantité de légumineuses sélectionnées parmi le groupe constitué de pois, lentilles, pois chiches, fèves des marais, haricots blancs et de mélanges de ceux-ci en une poudre, ladite poudre étant broyée en une consistance telle qu'au moins la moitié du produit de légumineuses a un diamètre de 5 microns ou moins ;
mélangeant une quantité de graines oléagineuses intactes sélectionnées parmi le groupe constitué du lin, tournesol, safran, colza, canola, soja et de combinaisons de ceux-ci avec la poudre, formant de ce fait un mélange, ledit mélange étant de 15 à 55 % de légumineuses et de 45 à 85 % de graine oléagineuse ;
extrudant le mélange à une température comprise entre environ 110°C (230°F) et environ 176,7°C (350°F) et une pression comprise entre environ 1379 kPa (200 psi) et environ 2758 kPa (400 psi) ; et
formant le mélange en des composants d'aliment ; et
récolter le produit comestible pour animaux de l'animal, **caractérisé en ce que** le produit comestible pour animaux a des niveaux d'oméga3 augmentés d'au moins 1,5 à 5 fois ou des niveaux de CLA augmentés d'au moins 1,5 à 2 fois par rapport à un produit comestible pour animaux récolté d'un animal similaire nourri d'une ration d'aliment standard.

7. Procédé selon la revendication 6, dans lequel la température va d'environ 123,9°C (255°F) à environ 135°C (275°F).

8. Procédé selon la revendication 6, dans lequel la température va d'environ 129,4°C (265°F) à environ 131,1°C (268°F).

9. Procédé selon la revendication 6, dans lequel la température va d'environ 148,9°C (300°F) à environ 162,8°C (325°F).

10. Procédé selon la revendication 6, dans lequel la température va d'environ 162,8°C (325°F) à environ 167,2°C (333°F).

11. Procédé selon la revendication 1, dans lequel le produit de légumineuses est des pois.

12. Procédé selon la revendication 1, dans lequel la graine oléagineuse est le lin.
